(19) Europäisches Patentamt
European Patent Office
Office européen des brevets

(11) Veröffentlichungsnummer: **0 327 807 B1**

(12) **EUROPÄISCHE PATENTSCHRIFT**

(45) Veröffentlichungstag der Patentschrift: **20.04.94**

(51) Int. Cl.5: **C09D 167/07**, C09D 175/16, C09D 133/04

(21) Anmeldenummer: **89100254.5**

(22) Anmeldetag: **09.01.89**

(54) **Lichtleiter auf Basis von Polycarbonatfasern und Verfahren zu ihrer Herstellung.**

(30) Priorität: **21.01.88 DE 3801576**

(43) Veröffentlichungstag der Anmeldung:
**16.08.89 Patentblatt 89/33**

(45) Bekanntmachung des Hinweises auf die Patenterteilung:
**20.04.94 Patentblatt 94/16**

(84) Benannte Vertragsstaaten:
**DE FR GB IT NL**

(56) Entgegenhaltungen:
**EP-A- 0 125 710**
**EP-A- 0 203 327**
**WO-A-80/00942**
**FR-A- 2 600 937**
**EP-A- 0 167 199**
**EP-A- 0 256 765**
**DE-A- 3 522 980**

(73) Patentinhaber: **BAYER AG**

**D-51368 Leverkusen(DE)**

(72) Erfinder: **Ebert, Wolfgang, Dr.**
**Doerperhofstrasse 31**
**D-4150 Krefeld(DE)**
Erfinder: **Haese, Wilfried, Dr.**
**Hauweg 32**
**D-4050 Mönchengladbach 1(DE)**
Erfinder: **Vogelsgesang, Roland, Dr.**
**Florastrasse 4**
**D-5090 Leverkusen 3(DE)**
Erfinder: **Dhein, Rolf, Dr.**
**Deswatinesstrasse 30**
**D-4150 Krefeld(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 327 807 B1

## Beschreibung

Die Erfindung betrifft neue Lichtleiter auf Basis von mit Kunststoffen beschichteten aromatischen Polycarbonatfasern und ein Verfahren zur Herstellung dieser Lichtleiter.

Lichtleiter auf Basis kunststoffbeschichteter Polyesterfasern, z.B. Polycarbonat-Fasern, sind bekannt (siehe z.B. (a) EP-A-0 203 327 und die veröffentlichten japanischen Anmeldungen (b) JA-A-84/216 104; (c) 84/216 105; (d) 84/218 404; (e) 86/231 510; (f) 86/240 206; (g) 86/245 110; (h) 86/278 807). In diesen Veröffentlichungen sind Lichtleiter auf Basis von Polycarbonat-Fasern beschrieben, deren Polycarbonatkern mit bestimmten Fluor enthaltenden Polymerisaten (siehe (a), (e), (f), (h)), mit bestimmten Mischpolymerisaten aus Methylmethacrylaten, Styrol oder Vinyltoluol und Maleinsäureanhydrid (siehe (b)), mit bestimmten Mischpolymerisaten aus Methylmethacrylaten, α-Methylstyrol und Maleinsäureanhydrid (siehe (c)), mit bestimmten Mischpolymerisaten aus Methylmethacrylat, α-Methylstyrol, Styrol und Maleinsäureanhydrid (siehe (d)) und mit Siliconharzen, Silicon-Acrylat-Harzen, Urethan-Acrylat-Harzen, Polyamiden oder Poly-4-methylpenten-1 (siehe (g)) überzogen sind.

Diese bislang für die Beschichtung von aromatischen Polycarbonatfasern vorgeschlagenen Kunststoffe befriedigen jedoch nicht, weil sie eine unzureichende Wärmeformbeständigkeit ((b), (c), (d)), eine zu geringe Reißdehnung ((b), (c), (d), (g)) und/oder eine unzureichende Haftung auf dem Polycarbonat aufweisen ((a), (e), (f), (g), (h)), für eine Anwendung im technischen Maßstab zu teuer sind ((a), (e), (f), (h)) und/oder zur Bildung von Spannungsrissen im Polycarbonatkern führen (g).

Es bestand daher die Aufgabe, Beschichtungsmaterialien für als Lichtleiter zu verwendende aromatische Polycarbonatfasern zu finden, die die vorstehend genannten Nachteile nicht aufweisen, sondern die die vorteilhaften Eigenschaften der Polycarbonatfasern (Transparenz, hoher Brechungsindex, hohe Wärmeformbeständigkeit, gute mechanische Eigenschaften, z.B. hohe Biege- und Reißfestigkeit, ferner ein geringes Wasseraufnahmevermögen), die die Polycarbonatfasern gegenüber anderen als Lichtleiter verwendeten Kunststoff-Fasern auszeichnen, nicht nur nicht beeinträchtigen, sondern sogar noch verstärken.

Es wurde gefunden, daß man eine Beschichtung von Lichtleitfasern auf Basis aromatischer Polycarbonate erhält, die sowohl die erforderlichen optischen Eigenschaften als auch die gewünschten thermischen und mechanischen Eigenschaften aufweist, eine hohe Härtungsgeschwindigkeit besitzt und die außerdem zu keiner Spannungsrißbildung in der Polycarbonatfaser führt, wenn man die Polycarbonatfasern mit einem mit UV-Strahlen polymerisierbaren Gemisch beschichtet, das polyfunktionelle (Meth)Acrylsäurederivate eines speziellen Typs, monofunktionelle (Meth)Acrylate eines speziellen Typs und übliche Fotoinitiatoren enthält, und dieses Gemisch auf der Faser durch UV-Bestrahlung polymerisiert.

Die Erfindung betrifft daher ein Verfahren zur Herstellung von Lichtleitern auf Basis aromatischer Polycarbonate, durch Beschichten der Polycarbonatfasern mit Kunststoffen, das dadurch gekennzeichnet ist, daß man für die Beschichtung durch UV-Strahlen polymerisierbare Gemische verwendet, die

A) 25 bis 75 Gew.-%, bezogen auf das Gesamtgewicht der polymerisierbaren Verbindungen, polyfunktionelle (Meth)Acrylsäurederivate der Formel

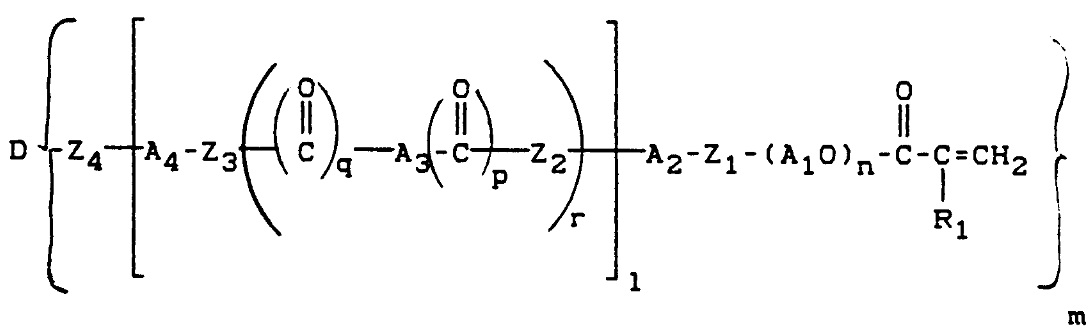

(I)

in der

| | |
|---|---|
| m | für 2, 3 oder 4 steht, |
| D | den m-wertigen Rest eines aliphatischen oder aromatischen Kohlenwasserstoffs bedeutet, |
| $R_1$ | Wasserstoff oder Methyl ist, |
| $Z_1$, $Z_2$ und $Z_3$ | unabhängig voneinander für Sauerstoff, Schwefel, die -N(R)-Gruppe, (in der R Wasserstoff oder gegebenenfalls substituiertes Alkyl, Aralkyl oder Aryl ist) oder |

einen 2-wertigen Rest der Formel

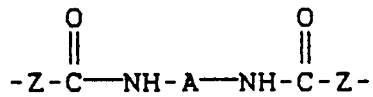 (II)

stehen, in der

Z Sauerstoff, Schwefel oder die -N(R)-Gruppe bedeutet, und

A ein gegebenenfalls substituierter 2-wertiger Rest eines aliphatischen, cycloaliphatischen, araliphatischen oder aromatischen Kohlenwasserstoffs ist,

$Z_4$ für Sauerstoff, den 2-werten Rest der Formel (II) oder einen der folgenden 2-wertigen Reste

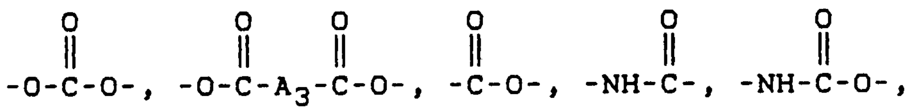

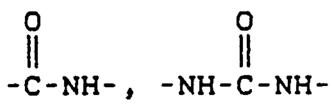

steht,

$A_1$,$A_2$,$A_3$ und $A_4$ unabhängig voneinander einen gegebenenfalls substituierten 2-wertigen Rest eines aliphatischen, cycloaliphatischen, araliphatischen oder aromatischen Kohlenwasserstoffs bedeuten,

n für Null oder eine ganze Zahl von 1 bis 20 steht,

p, q und r unabhängig voneinander den Wert Null oder 1 annehmen können und

l einen solchen Zahlenwert hat, daß das Molekulargewicht des polyfunktionellen (Meth)Acrylsäurederivate der Formel (I) 450 bis 5000 beträgt,

B) 75 bis 25 Gew.-%, bezogen auf das Gesamtgewicht der polymerisierbaren Verbindungen, monofunktionelle (Meth)Acrylsäureester der Formel

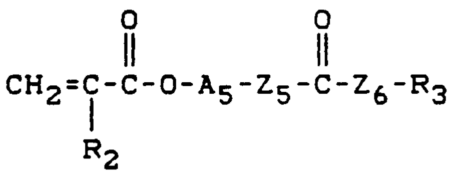 (III),

in der

$R_2$ Wasserstoff oder Methyl ist,

$A_5$ einen gegebenenfalls substituierten 2-wertigen Rest eines aliphatischen oder cycloaliphatischen Kohlenwasserstoffs bedeutet,

$Z_5$ und $Z_6$ unabhängig voneinander für Sauerstoff, Schwefel oder die -N(R')-Gruppen stehen, in der R' H oder gegebenenfalls substituiertes Alkyl, Aralkyl oder Aryl ist, und

$R_3$ ein gegebenenfalls substituierter Alkyl-, Cycloalkyl- oder Aralkyl-Rest ist, und

C) 0,1 bis 10 Gew.-%, bezogen auf das Gesamtgewicht der polymerisierbaren Verbindungen, Fotoinitiatoren

enthalten und die Gemische auf den Fasern durch UV-Strahlen polymerisiert.

Die Erfindung betrifft ferner die nach dem erfindungsgemäßen Verfahren erhaltenen Lichtleiter bestehend aus einem Polycarbonatkern, der mit einer Kunststoffschicht überzogen ist, die durch Aufbringen des durch UV-Strahlen polymerisierbaren Gemisches aus den vorstehend genannten Komponenten A, B und C und nachfolgende Polymerisation des Gemisches auf den Fasern erzeugt wurde.

Es ist bekannt, durch UV-Strahlen polymerisierbare Mischungen aus poly- und monofunktionellen (Meth)Acrylaten für die Beschichtung von als Lichtleiter zu verwendenden Glasfasern einzusetzen (siehe z.B. ($\alpha$) EP-A 0 125 710; ($\beta$) EP-A 0 145 929; ($\gamma$) EP-A 0 167 199; ($\delta$) DE-OS 3 522 980).

Diese vorbeschriebenen, für die Beschichtung von Glasfasern entwickelten Gemische sind für aromatische Polycarbonatfasern ungeeignet, da sie zur Bildung von Spannungsrissen im Polycarbonatkern führen und außerdem einen zu hohen Brechungsindex aufweisen.

Bevorzugt werden im erfindungsgemäßen Verfahren solche polyfunktionellen (Meth)Acrylate der Formel (I) eingesetzt, in der m, D, $R_1$, $Z_1$, $Z_2$, $Z_3$, $Z_4$, n, p, q, r und l die unter Formel (I) angegebene Bedeutung haben und $A_1$, $A_2$, $A_3$, $A_4$ und A unabhängig voneinander für einen gegebenenfalls substituierten, 2-wertigen aliphatischen oder cycloaliphatischen Kohlenwasserstoffrest stehen.

Besonders bevorzugt sind solche polyfunktionellen (Meth)Acrylate der Formel (I), in der D, l, m, n und r die unter Formel (I) angegebene Bedeutung haben,
p und q den Wert 1 haben,
$Z_2$ und $Z_3$ Sauerstoff bedeuten,
$Z_1$ für Sauerstoff, oder die Gruppe

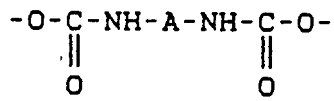

steht, in der A ein gegebenenfalls subtituierter, 2-wertiger Rest eines aliphatischen oder cycloaliphatischen $C_2$-$C_{18}$-Kohlenwasserstoffs, vorzugsweise der Rest

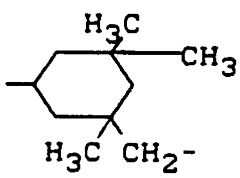 ist,

$Z_4$ für Sauerstoff oder eine der Gruppen

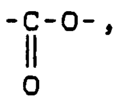 , 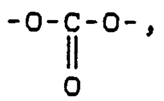 , 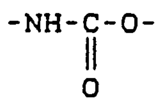 oder 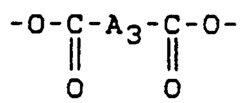

steht, in der $A_3$ ein gegebenenfalls substituierter $C_2$-$C_{18}$-Rest eines aliphatischen oder cycloaliphatischen Kohlenwasserstoffs ist,

$A_1$ ein Ethylen- oder Propylen-1,2-Rest ist und

$A_2$, $A_3$ und $A_4$ unabhängig voneinander gegebenenfalls substituierte, zweiwertige Reste, vorzugsweise $C_2$-$C_8$-Reste, aliphatischer oder cycloaliphatischer Kohlenwasserstoffe sind,

Bevorzugt werden im erfindungsgemäßen Verfahren solche monofunktionellen (Meth)Acrylate der Formel (III) eingesetzt, in der $R_2$ die unter Formel (III) angegebene Bedeutung hat,
$A_5$ ein gegebenenfalls substituierter $C_2$-$C_6$-Alkylen-Rest ist,
$Z_5$ und $Z_6$ unabhängig voneinander für Sauerstoff oder die -NH-Gruppe stehen und $R_3$ ein $C_1$-$C_{18}$-Alkylrest ist.

Besonders bevorzugt sind solche monofunktionellen (Meth)Acrylate der Formel (III), in der
$R_2$ die unter Formel (III) angegebene Bedeutung hat und
$R_3$ für einen gegebenenfalls substituierten $C_1$-$C_5$-Alkylrest,
$A_5$ für einen Ethylenrest und
$Z_5$ für Sauerstoff und $Z_6$ für die -NH-Gruppe stehen.

Für D seien als 4-wertige Reste aliphatischer oder aromatischer Kohlenwasserstoffe beispielsweise die 4-wertigen aliphatischen Alkoholen, wie Pentaerythrit, zugrundeliegenden Kohlenwasserstoffreste genannt.

Für D seien als 3-wertige Reste aliphatischer oder aromatischer Kohlenwasserstoffe beispielsweise die aliphatischen Triolen, wie Glycerin, Trimethylolethan, Trimethylolpropan oder Hexantriol, aromatischen Tricarbonsäuren, wie Benzol-1,2,4-tricarbonsäure oder Benzol-1,3,5-tricarbonsäure, oder aromatischen Triisocyanaten, wie 2,4,6-Toluylentriisocyanat oder 4,4′,4″-Triphenylmethantriisocyanat, zugrundeliegenden Kohlenwasserstoffreste genannt.

Für D, $A_1$, $A_2$, $A_3$, $A_4$ und $A_5$ seien als gegebenenfalls substituierte 2-wertige Reste aliphatischer, cycloaliphatischer, araliphatischer oder aromatischer Kohlenwasserstoffe vor allem die aliphatischen Diolen, wie Ethylenglykol, 1,2-Propandiol, 1,3-Propandiol, 2,2-Dimethyl-1,3-propandiol,1,2-Butandiol, 1,3-Butandiol, 2,3-Butandiol, 1,4-Butandiol, 1,5-Pentandiol, 1,6- und 2,5-Hexandiol, Diethylenglykol, Triethylenglykol, Dipropylenglykol, 2,2,4-Trimethylpentandiol-1,3, 2-Methylpentandiol-2,4 und 2-Ethylhexandiol-1,3, oder cycloaliphatischen Diolen, wie 2,2-Dimethyl-4,4-dimethylcyclobutandiol, 1,2-Cyclopentandiol, 1,3-Cyclopentandiol, 1,2-, 1,3- und 1,4-Cyclohexandiol, 1,4-Bishydroxymethylcyclohexan, 2,2-Bis-(4-hydroxycyclohexyl)-propan, 1-Methyl-2,2-bis-(4-hydroxycyclohexyl)-ethan, 2-Methyl-2,4-bis-(4-hydroxycyclohexyl)-pentan und Bis-hydroxymethyl-hexahydro-4,7-methano-indan, zugrundeliegenden Kohlenwasserstoffreste genannt.

Für $A_3$ seien darüber hinaus noch die aliphatischen Dicarbonsäuren wie Bernsteinsäure, Dimethylmalonsäure, Glutarsäure, Methylbernsteinsäure, Adipinsäure, Dimethylbernsteinsäure, Pimellinsäure, Korksäure, Azelainsäure, Sebacinsäure, Decandicarbonsäure oder Dimerfettsäure, oder cycloaliphatischen Dicarbonsäuren wie 1,2-, 1,3-, 1,4-Cyclohexandicarbonsäure, und aromatischen Carbonsäuren wie Terephthalsäure, Isophthalsäure, Phthalsäure, Naphthalin-1,2-, -1,4-, -1,5-, -1,8-dicarbonsäure, 5-Methylisophthalsäure, Tetrahydrophthalsäure und Hexahydroendomethylentetrahydrophthalsäure, zugrundeliegenden Kohlenwasserstoffreste genannt.

Für A seien als gegebenenfalls substituierte, 2-wertige aliphatische, cycloaliphatische, araliphatische oder aromatische Kohlenwasserstoffreste vor allem die aliphatischen Diisocyanaten, wie Hexamethylendiisocyanat oder Trimethylhexamethylendiisocyanat-1,6, cycloaliphatischen Diisocyanate, wie Cyclohexan-1,4-diisocyanat, Cyclopentan-1,3-diisocyanat, Methylen-bis-(4,4′-cyclohexyl)-diisocyanat und 1-Isocyanatomethyl-5-isocyanato-1,3,3-trimethylcyclohexan, und aromatischen Diisocyanaten wie 2,4- und 2,6-Toluylendiisocyanat, 3,3′-Dimethyl-4,4′-diphenylmethandiisocyanat, 4,4′-Diphenylmethandiisocyanat und 4,4′-Diphenyletherdiisocyanat, zugrundeliegenden Kohlenwasserstoffreste genannt.

Für $R_3$ seien als gegebenenfalls substituierte Alkylreste $C_1$-$C_{18}$-Alkylreste wie der Methyl-, Ethyl-, Propyl-, n-Butyl-, sec.-Butyl-, i-Propyl, tert.-Butyl, i-Butyl, Pentyl, i-Pentyl, Neopentyl, Heptyl, n-Hexyl-, 2-Ethylhexyl-, Nonyl, Decyl, Cetyl, Dodecyl- und Stearylrest, als cycloaliphatische Reste gegebenenfalls durch Methylgruppen substituierte Cyclopentyl- und Cyclohexylreste genannt; als araliphatische Reste kommen vor allen Dingen der Benzylrest und durch Methyl- und niedere Alkoxygruppen substituierte Benzylreste in Betracht.

Bei den polyfunktionellen (Meth)Acrylsäurederivaten der Formel (I) handelt es sich um Ether-, Ester-, Urethan-und/oder Harnstoff-Gruppen enthaltende Verbindungen. Vorzugsweise sind es mit (Meth)-Acrylsäurederivaten umgesetzte Polyether und/oder Polyester-Polyole.

Bei den monofunktionellen (Meth)Acrylaten der Formel (III) handelt es sich um (Meth)Acrylsäureester, die zusätzlich eine Ester-, Urethan- und/oder Harnstoffgruppe aufweisen.

Die erfindungsgemäß zu verwendenden Gemische können zusätzlich zu den Komponenten A, B und C noch übliche Zusatzstoffe wie Lösungsmittel, die gegen Polycarbonate inert sind, ferner Polymerisationsinhibitoren, Antioxidantien usw. enthalten.

Als Fotoinitiatoren seien z.B. genannt: Benzoin, Benzoinether, Benzylketale, Benzophenon, Thioxanthon und deren Derivate z.B. Benzyldimethylketal und 2-Hydroxy-2-methyl-1-phenyl-propan-1-on.

Die erfindungsgemäß zu beschichtenden, als Lichtleiter zu verwendenden Polycarbonate sind bekannt. Diese Polycarbonate und die gängigen Verfahren zu ihrer Herstellung sind z.B. in "Chemistry and Physics of Polycarbonates" Polymer Rev. Vol. 9, Interscience Publishers beschrieben. Sie können gegebenenfalls unter Zusatz bekannter Kettenabbrecher (siehe EP-A-0 010 602, DE-OS 3 143 252), Verzweiger wie Trisphenolen und/oder Isatinbiskresol(phenol) (siehe die deutschen Offenlegungsschriften 1 570 533, 1 595 762, 2 500 092), Stabilisatoren wie Phosphanen und/oder Phosphiten (siehe EP-A-0 143 906, DE-OS 21 40 207) und Entformungsmitteln (siehe die deutschen Offenlegungsschriften 2 507 748, 2 729 485 und 2 064 095) hergestellt werden. Die Aufarbeitung der Polycarbonate wird in bekannter Weise durch Fällen, Sprühverdampfen oder Extrusion vorgenommen. Die Relative Viskosität einer 0,5 %igen Lösung des Polycarbonates in Methylenchlorid sollte bei 25 °C zwischen 1,18 und 1,32 liegen.

Die Viskosität der erfindungsgemäß auf die Polycarbonatfasern aufzubringenden, durch UV-Strahlen polymerisierbaren Gemische der Komponenten A, B und C kann durch die Wahl des Molekulargewichts der Komponenten A und B und/oder durch das Mengenverhältnis der Komponenten A und B in weiten Grenzen variiert und auf die vorgesehenen Abspinngeschwindigkeiten und Spinntemperaturen eingestellt werden. Bevorzugt weisen die erfindungsgemäß zu verwendenden Gemische eine Viskosität von 500 bis 10000 cP (mPa•s) bei 25 °C auf. Die erfindungsgemäß zu verwendenden Gemische können bei Temperaturen von 15 bis 140 °C verarbeitet werden.

Verfahrensmäßig kann zunächst der Polycarbonat-Kern des Lichtleiters hergestellt und später mit den erfindungsgemäß aufzubringenden Beschichtungsmaterialien versehen werden. Vorteilhafter ist es jedoch,

die Beschichtung unmittelbar nach der Herstellung der Polycarbonatfaser vorzunehmen. Die Dicke der erfindungsgemäß auf die Polycarbonatfaser aufzubringenden Beschichtung sollte <50 µm sein.

Die erfindungsgemäßen Lichtleiter können zu ein- oder mehradrigen Kabeln verarbeitet werden, indem man die Lichtleiter einzeln für sich oder mehrere zu einem Bündel zusammengefaßte Lichtleiter mit weiteren Polymerschichten, z.B. durch Coextrusion, umhüllt.

Beispiele 1 bis 12

Eine Polycarbonatfaser (Durchmesser: 1,0 mm) wurde senkrecht von oben nach unten zentrisch durch ein Gefäß gezogen, welches an seinem Boden eine Düse (Durchmesser: 1,2 mm) besaß. Das Gefäß wurde jeweils mit einem der nachstehend beschriebenen Beschichtungsgemische gefüllt. Durch den zwischen Faden und Düse verbleibenden Ringspalt erfolgte die gleichmäßige Beschichtung der Faser mit dem betreffenden Gemisch.

Unterhalb des Beschichtungsgefäßes befand sich parallel zum Faden eine 20 cm lange Quecksilbermitteldrucklampe (Leistung: 120 W/cm), deren Brennlinie mittels Parabolspiegel auf dem Faden fokussiert war, um eine möglichst hohe Lichtausbeute für die UV-Polymerisation der Beschichtungsgemische zu erhalten.

Nach Passieren einer Umlenkrolle wurde der beschichtete Faden auf eine große Trommel gewickelt, die mittels eines Motorantriebs für das Durchziehen des Fadens durch die Anlage sorgte, wobei die Geschwindigkeit konstant 5 m/min betrug.

Die Dicke der auf den Polycarbonatfaden aufgebrachten Beschichtung betrug in allen Fällen 10 bis 30 µm.

Die erhaltenen, mit UV-polymerisierter Beschichtung versehenen Polycarbonatfasern wurden 1 Monat bei Raumtemperatur gelagert und anschließend auf eine etwaige Schädigung des Polycarbonatkerns, z.B. durch Spannungsrisse, geprüft. In der folgenden Tabelle 1 sind die mit den einzelnen Gemischen erhaltenen Ergebnisse sowie die Zusammensetzungen der Gemische zusammengestellt.

Tabelle 1

| Gemisch Nr. | Komponente A Umsetzungsprodukt | (Gew.-Tle) | Komponente B (Gew.-Teile) | Verhalten des mit dem entspr. Gemisch beschichteten Fadens bei Biegung des Fadens um einen Rundstab von 10 mm Durchmesser nach 1-monatiger Lagerung |
|---|---|---|---|---|
| 1 | d | (50) | 1-(N-butyl-carbamoyl)-ethyl-acrylat (50) | keine Schädigung |
| 2 | e | (40) | 2-(N-butyl-carbamoyl)-ethyl-acrylat (60) | " |
| 3 | g | (40) | 2-(N-butyl-carbamoyl)-ethyl-acrylat (60) | " |
| 4 | b | (60) | 2-(N-butyl-carbamoyl)-ethyl-acrylat (40) | " |
| 5 | a | (60) | 2-(N-sec.-butyl-carbamoyl)-ethylacrylat (40) | " |
| 6 | c | (50) | 2-(N-butyl-carbamoyl)-ethyl-acrylat (50) | " |
| 7 | f | (50) | 2-(N-butyl-carbamoyl)-ethyl-acrylat (50) | " |
| 8 | h | (40) | 2-(N-butyl-carbamoyl)-ethyl-acrylat (60) | " |
| 9 | d | (50) | Butylacrylat (50) | Bruch bei Biegung |
| 10 | h | (60) | N-Vinylpyrrolidon (50) | teilw. Bruch schon während Lagerung |
| 11 | e | (50) | Tetrahydrofurfurylacrylat (50) | teilw. Bruch schon während Lagerung |
| 12 | a | (40) | 2-Ethylhexylacrylat (60) | Bruch bei Biegung |

Anmerkung: Alle Gemische 1-12 enthielten 3 Gew.-Teile des Fotoinitiators 2-Hydroxy-2-methyl-1-phenyl-propan-1-on.

Gemische 9 bis 12 sind zum Stand der Technik gehörende Vergleichsgemische

Die maximale Härtungsgeschwindigkeit der einzelnen Gemische wurde in der nachstehend beschriebenen vereinfachten Weise an beschichteten Folien bestimmt; die an den Folien erhaltenen Ergebnisse sind jedoch ohne weiteres auf Fasern übertragbar.

Die Gemische wurden mit einer Handrakel auf eine Polycarbonatplatte aufgebracht (Filmdicke: 50 µm). Die beschichteten Polycarbonatplatten wurden mit eine bestimmten Geschwindigkeit unter einer UV-Bestrahlungsanlage (UV-Laborgerät der Firma U. Steinemann AG; 80 W/cm) hindurchgeführt. Bestimmt wurde die für die Durchhärtung des jeweiligen Gemisches gerade noch zulässige Bandgeschwindigkeit (= maximale Bandgeschwindigkeit [m/min]).

| Gemisch | max. Härtungsgeschwindigkeit (m/min) |
|---|---|
| 1 | 60 |
| 2 | >60 |
| 3 | >60 |
| 4 | >60 |
| 5 | >60 |
| 6 | >60 |
| 7 | >60 |
| 8 | 60 |
| 9 | 25 |
| 10 | >60 |
| 11 | 50 |
| 12 | 20 |

Bei den Beispielen 9 bis 12 (Gemischen 9 bis 12) handelt es sich um Vergleichsbeispiele (Vergleichsgemische).

Die in den Gemischen 1 bis 12 als Komponente A verwendeten Umsetzungsprodukte a bis h wurden wie folgt erhalten:

Umsetzungsprodukt a:

In einem mit Rührer, Thermometer und Gaseinleitungsrohr versehenen 2 l-Kolben wurden 500 g eines linearen Polyethers (mittleres Molekulargewicht: ~1000; Umsetzungsprodukt von Propandiol-1,2 mit Propylenoxid), 167 g 2-Hydroxyethylacrylat, 0,5 g Desmorapid$^R$ SO und 0,3 g p-Methoxyphenol vorgelegt. Bei 60 bis 65 °C und unter Durchleiten von trockener Luft wurden anschließend 265 g Isophorondiisocyanat zugetropft. Die Reaktionsmischung wurde anschließend solange bei 60 bis 65 °C gerührt, bis die NCO-Zahl unter 0,1 % gesunken war.

Umsetzungsprodukt b:

500 g eines OH-Gruppen aufweisenden linearen Polyesters (mittleres Molekulargewicht: 1000; OH-Zahl 112; Umsetzungsprodukt aus Adipinsäure und Neopentylglykol), 255 g 2-Hydroxyethylacrylat und 350 g Isophorondiisocyanat wurden in der für das Umsetzungsprodukt a) beschriebenen Weise umgesetzt.

Umsetzungsprodukt c:

500 g unverzweigter, hydroxylgruppenhaltiger Polyester (mittleres Molekulargewicht: 2250; Umsetzungsprodukt aus Adipinsäure und Butandiol), 300 g 2-Hydroxyethylacrylat und 335 g Isophorondiisocyanat wurden in der für das Umsetzungsprodukt a) beschriebenen Weise umgesetzt.

Umsetzungsprodukt d:

500 g eines linearen Polypropylenglykols (mittleres Molekulargewicht: 2000), 250 g 2-Hydroxyethylacrylat und 290 g Isophorondiisocyanat wurden in der für das Umsetzungsprodukt a) beschriebenen Weise umgesetzt.

Umsetzungsprodukt e:

In einem mit Rührer, Thermometer, Gaseinleitungsrohr und Wasserabscheider versehenen 1 l-Kolben wurden 500 g eines hydroxylgruppenhaltigen linearen Polyesters (mittleres Molekulargewicht: 1000; OH-Zahl 112; Umsetzungsprodukt aus Adipinsäure und Neopentylglykol), 40 g Acrylsäure, 2 g p-Toluolsulfonsäure, 0,3 g p-Methoxyphenol, 0,3 g Di-tert.-butyl-hydrochinon und 190 g Toluol vorgelegt und unter

Durchleiten von Luft auf Rückflußtemperatur erhitzt. Nach Abspaltung der theoretischen Wassermenge wurde das Toluol in Vakuum abdestilliert.

Das erhaltene Produkt wurde anschließend in einem mit Rührer, Thermometer und Gaseinleitungsrohr versehenen 1 l-Kolben gefüllt und mit 0,1 g Desmorapid$^{R}$ SO sowie 0,05 g Di-tert.-butyl-hydrochinon versetzt und auf 60 bis 65 °C erhitzt. Bei dieser Temperatur werden unter Durchleiten von trockener Luft 50 g Isophorondiisocyanat zugetropft. Die Reaktionsmischung wurde anschließend solange bei 60 bis 65 °C gerührt, bis die NCO-Zahl unter 0,1 % abgesunken war.

Umsetzungsprodukt f:

500 g eines hydroxygruppenaufweisenden linearen Polyethers (mittleres Molekulargewicht: 1000; Umsetzungsprodukt von Propandiol-1,2 mit Propylenoxid), 40 g Acrylsäure, 2,7 g p-Toluolsulfonsäure, 0,3 g p-Methoxyphenol, 0,3 g Di-tert.-butyl-hydrochinon und 190 g Toluol wurden in der für das Umsetzungsprodukt e) beschriebenen Weise umgesetzt und nach Abdestillieren des Toluols mit 50 g Isophorondiisocyanat ebenfalls wie für Umsetzungsprodukt e) beschrieben, umgesetzt.

Umsetzungsprodukt g:

600 g eines linearen hydroxylgruppenhaltigen Polyesters (mittleres Molekulargewicht: 2000; Umsetzungsprodukt aus Adipinsäure mit Ethylenglykol, Diethylenglykol und Butandiol), 22,7 g Acrylsäure, 3,1 g p-Toluolsulfonsäure, 0,3 g p-Methoxyphenol, 0,3 g Di-tert.-butyl-hydrochinon und 220 g Toluol werden nach der für Umsetzungsprodukt e) beschriebenen Weise umgesetzt und nach Entfernen des Toluols mit 31,6 g Isophorondiisocyanat ebenfalls wie für Umsetzunsprodukt e) beschrieben, umgesetzt.

Umsetzungsprodukt h:

500 g eines hydroxygruppenaufweisenden linearen Polyethers (mittleres Molekulargewicht: 1000; Umsetzungsprodukt von Propandiol-1,2 mit Propylenoxid), 500 g 2-Hydroxyethylacrylat und 590 g Isophorondiisocyanat werden unter den für Umsetzungsprodukt a) beschriebenen Bedingungen umgesetzt.

## Patentansprüche

1. Verfahren zur Herstellung von Lichtleitern auf Basis aromatischer Polycarbonate durch Beschichten der Polycarbonatfasern mit Kunststoffen, dadurch gekennzeichnet, daß man für die Beschichtung durch UV-Strahlen polymerisierbare Gemische verwendet, die

   (A) 25 bis 75 Gew.-%, bezogen auf das Gesamtgewicht der polymerisierbaren Verbindungen, polyfunktionelle (Meth)Acrylsäurederivate der Formel

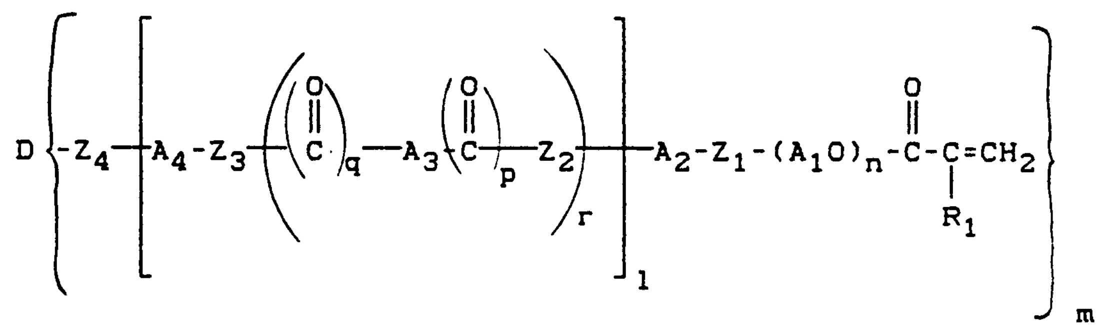

(I)

in der

| | |
|---|---|
| m | für 2, 3 oder 4 steht, |
| D | den m-wertigen Rest eines aliphatischen oder aromatischen Kohlenwasserstoffs bedeutet, |
| $R_1$ | Wasserstoff oder Methyl ist, |
| $Z_1$, $Z_2$ und $Z_3$ | unabhängig voneinander für Sauerstoff, Schwefel, die -N(R)-Gruppe, (in der R Wasserstoff oder gegebenenfalls substituiertes Alkyl, Aralkyl oder Aryl ist) |

oder einen 2-wertigen Rest der Formel

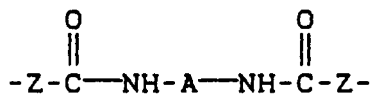 (II)

stehen, in der

| | |
|---|---|
| Z | Sauerstoff, Schwefel oder die -N(R)-Gruppe bedeutet, und |
| A | ein gegebenenfalls substituierter 2-wertiger Rest eines aliphatischen, cycloaliphatischen, araliphatischen oder aromatischen Kohlenwasserstoffs ist, |
| $Z_4$ | für Sauerstoff, den 2-werten Rest der Formel (II) oder einen der folgenden 2-wertigen Reste |

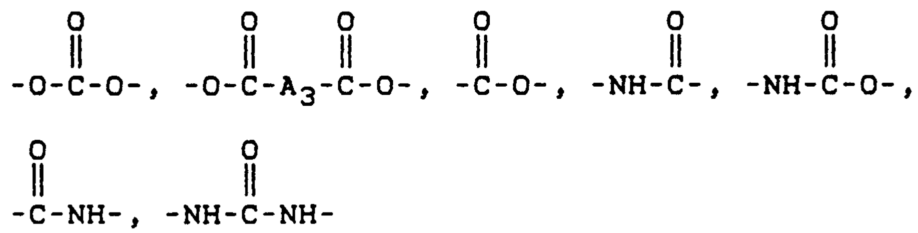

| | |
|---|---|
| | steht, |
| $A_1$,$A_2$,$A_3$ und $A_4$ | unabhängig voneinander einen gegebenenfalls substituierten 2-wertigen Rest eines aliphatischen, cycloaliphatischen, araliphatischen oder aromatischen Kohlenwasserstoffs bedeuten, |
| n | für Null oder eine ganze Zahl von 1 bis 20 steht, |
| p, q und r | unabhängig voneinander den Wert Null oder 1 annehmen können und |
| l | einen solchen Zahlenwert hat, daß das Molekulargewicht des polyfunktionellen (Meth)Acrylsäurederivate der Formel (I) 450 bis 5000 beträgt, |

(B) 75 bis 25 Gew.-%, bezogen auf das Gesamtgewicht der polymerisierbaren Verbindungen, monofunktionelle (Meth)Acrylsäureester der Formel

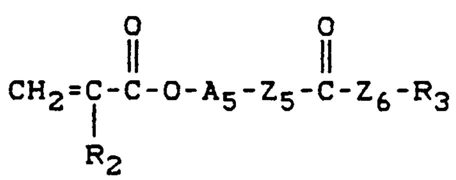 (III),

in der

| | |
|---|---|
| $R_2$ | Wasserstoff oder Methyl ist, |
| $A_5$ | einen gegebenenfalls substituierten 2-wertigen Rest eines aliphatischen oder cycloaliphatischen Kohlenwasserstoffs bedeutet, |
| $Z_5$ und $Z_6$ | unabhängig voneinander für Sauerstoff, Schwefel oder die -N(R′)-Gruppen stehen, in der R′ H oder gegebenenfalls substituiertes Alkyl, Aralkyl oder Aryl ist, und |
| $R_3$ | ein gegebenenfalls substituierter Alkyl-, Cycloalkyl- oder Aralkyl-Rest ist, und |

C) 0,1 bis 10 Gew.-%, bezogen auf das Gesamtgewicht der polymerisierbaren Verbindungen, Fotoinitiatoren

enthalten und die Gemische auf den Fasern durch UV-Strahlen polymerisiert.

**2.** Verfahren nach Anspruch 1, dadurch gekennzeichnet, daß man solche polyfunktionellen (Meth)Acrylate der Formel (I) einsetzt, in der m, D, $R_1$, $Z_1$, $Z_2$, $Z_3$, $Z_4$, n, p, q, r und l die in Anspruch 1 unter Formel (I) angegebene Bedeutung haben und
$A_1$, $A_2$, $A_3$, $A_4$ und A unabhängig voneinander für einen gegebenenfalls substituierten, 2-wertigen aliphatischen oder cycloaliphatischen Kohlenwasserstoffrest stehen.

**3.** Verfahren nach Anspruch 1, dadurch gekennzeichnet, daß man solche polyfunktionellen (Meth)Acrylate der Formel (I) einsetzt, in der D, l, m, n und r die in Anspruch 1 unter Formel (I) angegebene Bedeutung haben,
p und q den Wert 1 haben,
$Z_2$ und $Z_3$ Sauerstoff bedeuten,
$Z_1$ für Sauerstoff, oder die Gruppe

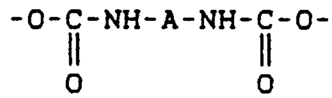

steht, in der A ein gegebenenfalls subtituierter, 2-wertiger Rest eines aliphatischen oder cycloaliphatischen $C_2$-$C_{18}$-Kohlenwasserstoffs ist,

$Z_4$ für Sauerstoff oder eine der Gruppen

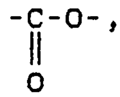, 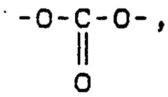, 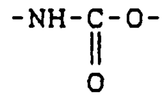 oder 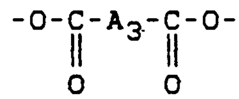

steht, in der $A_3$ ein gegebenenfalls substituierter, 2-wertiger Rest eines aliphatischen oder cycloaliphatischen $C_2$-$C_{18}$-Kohlenwasserstoffs ist,

$A_1$ ein Ethylen- oder Propylen-1,2-Rest ist und

$A_2$, $A_3$ und $A_4$ unabhängig voneinander gegebenenfalls substituierte, zweiwertige Reste aliphatischer oder cycloaliphatischer Kohlenwasserstoffe sind.

**4.** Verfahren nach einem der Ansprüche 1, 2 oder 3, dadurch gekennzeichnet, daß man solche monofunktionellen (Meth)Acrylate der Formel (III) einsetzt, in der $R_2$ die in Anspruch 1 unter Formel (III) angegebene Bedeutung hat,
$A_5$ ein gegebenenfalls substituierter $C_2$-$C_6$-Alkylen-Rest ist,
$Z_5$ und $Z_6$ unabhängig voneinander für Sauerstoff oder die -NH-Gruppe stehen und $R_3$ ein $C_1$-$C_{18}$-Alkylrest ist.

**5.** Verfahren nach einem der Ansprüche 1, 2, 3 oder 4, dadurch gekennzeichnet, daß man solche monofunktionellen (Meth)Acrylate der Formel (III) einsetzt, in der
$R_2$ die in Anspruch 1 unter Formel (III) angegebene Bedeutung hat und
$R_3$ für einen gegebenenfalls substituierten $C_1$-$C_5$-Alkylrest,
$A_5$ für einen Ethylenrest und
$Z_5$ für Sauerstoff und $Z_6$ für die -NH-Gruppe stehen.

**6.** Lichtleiter auf Basis von arom. Polycarbonat erhalten nach dem Verfahren gemäß Ansprüchen 1 bis 5.

## Claims

**1.** A process for the production of optical fibres based on aromatic polycarbonates by coating the polycarbonate fibres with polymers, characterized in that UV-polymerizable mixtures containing
A) 25 to 75% by weight, based on the total weight of the polymerizable compounds, of polyfunctional (meth)acrylic acid derivatives corresponding to the following formula:

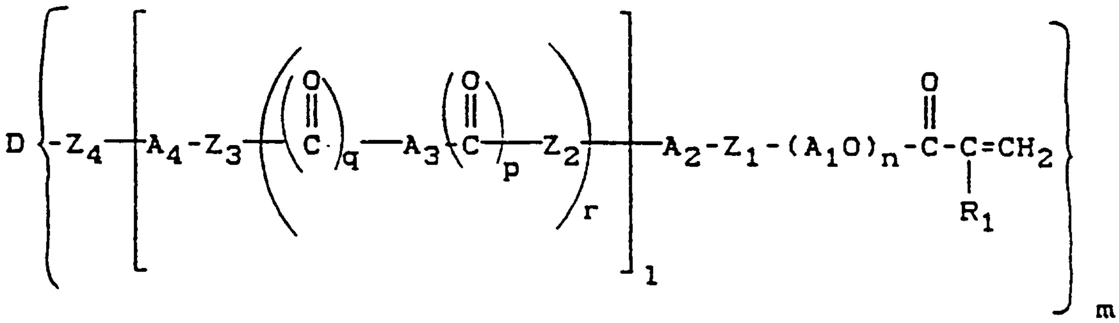

(I)

in which

- m = 2, 3 or 4,
- D is an m-functional aliphatic or aromatic hydrocarbon radical,
- $R_1$ is hydrogen or methyl,
- $Z_1$, $Z_2$ and $Z_3$ independently of one another represent oxygen, sulfur, the -N(R) group (where R is hydrogen or optionally substituted alkyl, aralkyl or aryl) or a difunctional radical corresponding to the following formula:

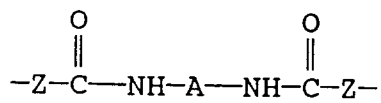

(II)

in which

- Z is oxygen, sulfur or the -N(R) group and
- A is an optionally substituted difunctional aliphatic, cycloaliphatic, araliphatic or aromatic hydrocarbon radical,
- $Z_4$ is oxygen, the difunctional radical (II) or one of the following difunctional radicals:

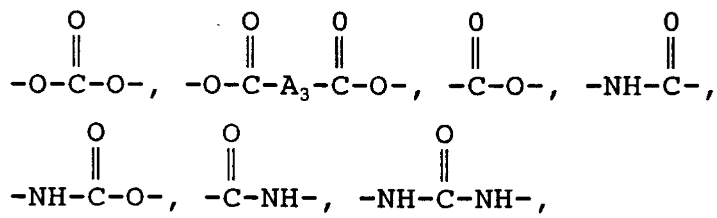

- $A_1$, $A_2$, $A_3$ and $A_4$ independently of one another represent an optionally substituted difunctional aliphatic, cycloaliphatic, araliphatic or aromatic hydrocarbon radical,
- n is zero or an integer of 1 to 20,
- p, q and r independently of one another may assume a value of 0 or 1 and
- l assumes such a value that the molecular weight of the polyfunctional (meth)acrylic acid derivatives corresponding to formula (I) is in the range from 450 to 5,000,

B) 75 to 25% by weight, based on the total weight of the polymerizable compounds, of monofunctional (meth)acrylates corresponding to the following formula:

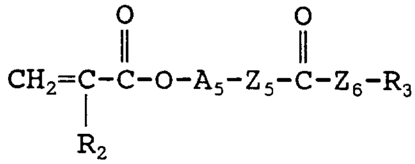

(III)

in which

$R_2$ is hydrogen or methyl,

$A_5$ is an optionally substituted difunctional aliphatic or cycloaliphatic hydrocarbon radical,

$Z_5$ and $Z_6$ independently of one another represent oxygen, sulfur or the -N(R') group, in which R' is H or optionally substituted alkyl, aralkyl or aryl, and

$R_3$ is an optionally substituted alkyl, cycloalkyl or aralkyl radical, and

C) 0.1 to 10% by weight, based on the total weight of the polymerizable compounds, of photoinitiators

are used for coating and the mixtures are polymerized on the fibres by exposure to UV radiation.

**2.** A process as claimed in claim 1, characterized in that polyfunctional (meth)acrylates corresponding to formula (I), in which m, D, $R_1$, $Z_1$, $Z_2$, $Z_3$, $Z_4$, n, p, q, r and l are as defined for formula (I) in claim 1 and $A_1$, $A_2$, $A_3$, $A_4$ and A independently of one another represent an optionally substituted difunctional aliphatic or cycloaliphatic hydrocarbon radical, are used.

**3.** A process as claimed in claim 1, characterized in that polyfunctional (meth)acrylates corresponding to formula (I), in which D, l, m, n and r are as defined for formula (I) in claim 1,
p and q have the value 1,
$Z_2$ and $Z_3$ represent oxygen,
$Z_1$ represents oxygen or the group

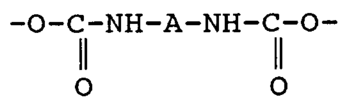

in which A is an optionally substituted difunctional aliphatic or cycloaliphatic $C_{2-18}$ hydrocarbon radical,
$Z_4$ is oxygen or one of the following groups:

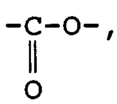, 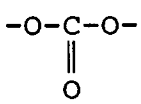, 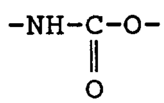 or 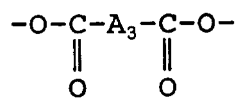

in which $A_3$ is an optionally substituted difunctional aliphatic or cycloaliphatic $C_{2-18}$ hydrocarbon radical,
$A_1$ is a 1,2-ethylene or 1,2-propylene group and $A_2$, $A_3$ and $A_4$ independently of one another represent optionally substituted difunctional aliphatic or cycloaliphatic hydrocarbon radicals,
are used.

**4.** A process as claimed in claim 1, 2 or 3, characterized in that monofunctional (meth)acrylates corresponding to formula (III), in which $R_2$ is as defined for formula (III) in claim 1,
$A_5$ is an optionally substituted $C_{2-6}$ alkylene radical,
$Z_5$ and $Z_6$ independently of one another represent oxygen or the -NH- group and $R_3$ is a $C_{1-18}$ alkyl radical,
are used.

**5.** A process as claimed in claim 1, 2, 3 or 4, characterized in that monofunctional (meth)acrylates corresponding to formula (III), in which
$R_2$ is as defined for formula (III) in claim 1,
$R_3$ is an optionally substituted $C_{1-5}$ alkyl radical,
$A_5$ is an ethylene group and
$Z_5$ is oxygen and $Z_6$ is the -NH- group,
are used.

**6.** Optical fibres based on aromatic polycarbonate obtained by the process claimed in claims 1 to 5.

## Revendications

1. Procédé de production de guides de lumière à base de polycarbonates aromatiques par enduction des fibres de polycarbonates avec des matières synthétiques, caractérisé en ce qu'on utilise pour l'enduction des mélanges polymérisables par les rayons ultraviolets, qui contiennent

   A) 25 à 75 % en poids, par rapport au poids total de composés polymérisables, de dérivés polyfonctionnels d'acide(méth)acrylique de formule

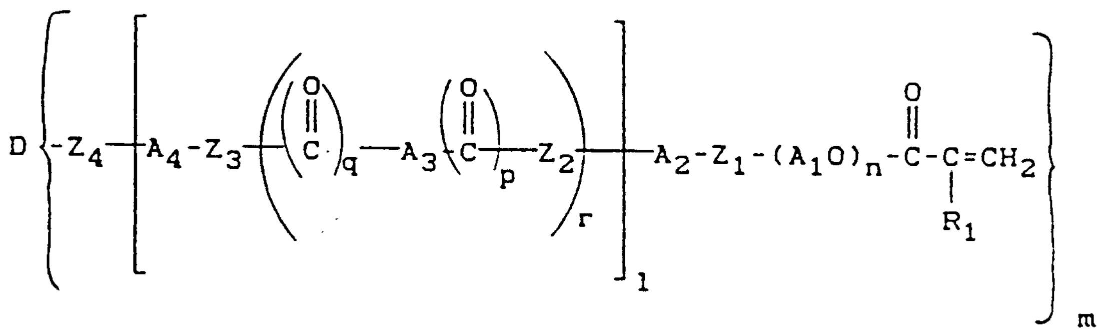

(I)

dans laquelle

| | |
|---|---|
| m | a la valeur 2, 3 ou 4, |
| D | est le reste de valence m d'un hydrocarbure aliphatique ou aromatique, |
| $R_1$ | représente l'hydrogène ou le groupe méthyle, |
| $Z_1$, $Z_2$ et$Z_3$ | représentent, indépendamment les uns des autres, l'oxygène, le soufre, le groupe -N(R)- (dans lequel R est l'hydrogène ou un groupe alkyle, aralkyle ou aryle éventuellement substitué) ou un reste divalent de formule |

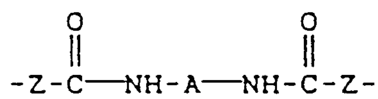

(II)

dans laquelle

| | |
|---|---|
| Z | représente l'oxygène, le soufre ou le groupe -N(R)- et |
| A | est un rese divalent éventuellement substitué d'un hydrocarbure aliphatique, cycloaliphatique, araliphatique ou aromatique, |
| $Z_4$ | représente l'oxygène, le reste divalent de formule (II) ou l'un des restes divalents suivants |

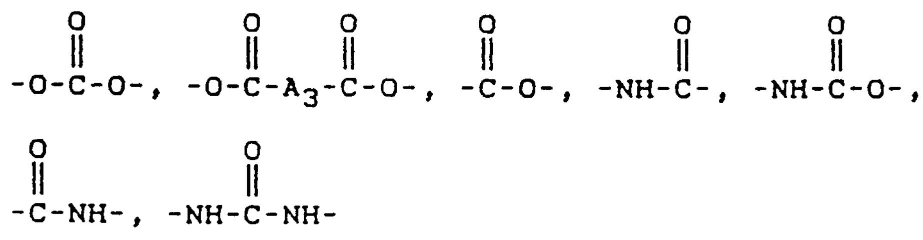

| | |
|---|---|
| $A_1$, $A_2$, $A_3$ et $A_4$ | représentent, indépendamment les uns des autres, un reste divalent éventuellement substitué d'un hydrocarbure aliphatique, cycloaliphatique, araliphatique ou aromatique, |
| n | est égal à zéro ou à un nombre entier de 1 à 20, |
| p, q et r | peuvent prendre, indépendamment les uns des autres, la valeur zéro ou 1 et |
| l | a une valeur numérique telle que le poids moléculaire du dérive polyfonctionnel d'acide (méth)acrylique de formule (I) s'élève à une valeur de 450 à 5000, |

B) 75 à 25% en poids, par rapport au poids total des composés polymérisables, d'esters monofonctionnels d'acide (méth)acrylique de formule

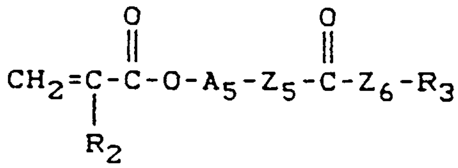

(III),

dans laquelle

$R_2$ est l'hydrogène ou un groupe méthyle,

$A_5$ est un reste divalent éventuellement substitué d'un hydrocarbure aliphatique ou cycloaliphatique,

$Z_5$ et $Z_6$ représentent, indépendamment l'un de l'autre, l'oxygène, le soufre ou un groupe -N-(R')- dans lequel R' représente H ou un groupe alkyle, aralkyle ou aryle éventuellement substitué, et

$R_3$ est un reste alkyle, cycloalkyle ou aralkyle éventuellement substitué, et

C) 0,1 à 10 % en poids, par rapport au poids total des composés polymérisables, de photoinitiateurs

et on polymérise les mélanges sur les fibres sous l'action de rayons ultraviolets.

**2.** Procédé suivant la revendication 1, caractérisé en ce qu'on utilise des (méth)acrylates polyfonctionnels de formule (I) dans laquelle m, D, $R_1$, $Z_1$, $Z_2$, $Z_3$, $Z_4$, n, p, q, r et l ont la définition indiquée dans la revendication 1 pour la formule (I) et $A_1$, $A_2$, $A_3$, $A_4$ et A représentent indépendamment les uns des autres un reste hydrocarboné aliphatique ou cycloaliphatique divalent éventuellement substitué.

**3.** Procédé suivant la revendication 1, caractérisé en ce qu'on utilise des (méth)acrylates polyfonctionnels de formule (I) dans laquelle D, l, m, n et r ont la définition indiquée pour la formule (I) dans la revendication 1,

p et q ont la valeur 1,

$Z_2$ et $Z_3$ représentent l'oxygène,

$Z_1$ est l'oxygène ou le groupe

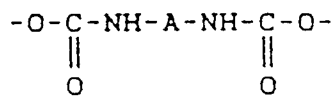

dans lequel A est un reste divalent éventuellement substitué d'un hydrocarbure aliphatique ou cycloaliphatique en $C_2$ à $C_{18}$,

$Z_4$ représente l'oxygène ou l'un des groupes

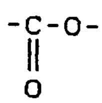
,
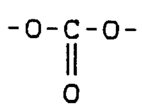
,
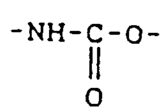
ou
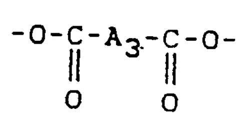

où $A_3$ est un reste divalent éventuellement substitué d'un hydrocarbure en $C_2$ à $C_{18}$ aliphatique ou cycloaliphatique,

$A_1$ est un reste éthylène ou propylène-1,2 et

$A_2$, $A_3$ et $A_4$ représentent, indépendamment les uns des autres, des restes divalents, éventuellement substitués, d'hydrocarbures aliphatiques ou cycloaliphatiques.

**4.** Procédé suivant l'une des revendications 1, 2 et 3, caractérisé en ce qu'on utilise des (méth)acrylates monofonctionnels de formule (III) dans laquelle $R_2$ a la définition indiquée pour la formule (III) dans la revendication 1,

$A_5$ est un reste alkylène en $C_2$ à $C_6$ éventuellement substitué,

$Z_5$ et $Z_6$ représentent, indépendamment l'un de l'autre, de l'oxygène ou le groupe -NH- et $R_3$ est un reste alkyle en $C_1$ à $C_{18}$.

**5.** Procédé suivant l'une des revendications 1, 2, 3 et 4, caractérisé en ce qu'on utilise des (méth)-acrylates monofonctionnels de formule (III) dans laquelle

$R_2$ a la définition indiquée pour la formule (III) dans la revendication 1 et

$R_3$ est un reste alkyle en $C_1$ à $C_5$ éventuellement substitué,

$A_5$ est un reste éthylène et

$Z_5$ est l'oxygène et $Z_6$ est le groupe -NH-.

**6.** Guides de lumière à base de polycarbonate aromatique, obtenus par le procédé suivant les revendications 1 à 5.